(19) Europäisches Patentamt
European Patent Office
Office européen des brevets

(11) **EP 2 786 464 B2**

(12) **NEW EUROPEAN PATENT SPECIFICATION**

After opposition procedure

(45) Date of publication and mention
of the opposition decision:
**29.03.2023   Bulletin 2023/13**

(45) Mention of the grant of the patent:
**01.05.2019   Bulletin 2019/18**

(21) Application number: **12821136.4**

(22) Date of filing: **29.11.2012**

(51) International Patent Classification (IPC):
**H02J 7/00** (2006.01)      **H02J 50/12** (2016.01)
**H02J 50/80** (2016.01)

(52) Cooperative Patent Classification (CPC):
**H02J 50/12; H02J 7/0044; H02J 50/80**

(86) International application number:
**PCT/IL2012/050491**

(87) International publication number:
**WO 2013/080212 (06.06.2013 Gazette 2013/23)**

(54) **SYSTEM AND METHOD FOR REGULATING INDUCTIVE POWER TRANSMISSION**

SYSTEM UND VERFAHREN ZUR REGULIERUNG DER INDUKTIVEN STROMÜBERTRAGUNG

SYSTÈME ET PROCÉDÉ DE RÉGULATION DE LA TRANSMISSION DE PUISSANCE INDUCTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **02.12.2011   US 201161566103 P**

(43) Date of publication of application:
**08.10.2014   Bulletin 2014/41**

(73) Proprietors:
• **Powermat Technologies Ltd.**
**Petach Tikva 4970602 (IL)**
• **Mach, Elieser**
**90938 Rosh Tzurim (IL)**
• **Rofe, Arik**
**96224 Jerusalem (IL)**
• **Greenwald, Oola**
**90805 Mevasseret Zion (IL)**
• **Raveh, Guy**
**99870 Mataa (IL)**

(72) Inventors:
• **MACH, Elieser**
**90938 Rosh Tzurim (IL)**
• **ROFE, Arik**
**96224 Jerusalem (IL)**
• **GREENWALD, Oola**
**90805 Mevasseret Zion (IL)**
• **RAVEH, Guy**
**99870 Mataa (IL)**

(74) Representative: **Maiwald GmbH
Elisenhof
Elisenstraße 3
80335 München (DE)**

(56) References cited:
WO-A2-2011/036659      US-A1- 2008 197 802
US-A1- 2010 066 176      US-A1- 2010 072 825
US-A1- 2010 148 589      US-A1- 2010 259 108
US-A1- 2011 121 658      US-B1- 6 556 415

## Description

The present invention relates to regulation of power in contactless power transmission systems. More specifically, the invention relates to an inductive power transfer system as defined by the preamble portions of claim 1 and 2.

Inductive power transmission systems are a convenient power provision alternative to common plug and socket power connections. Inductive power transmission allows power to be transferred from an inductive power outlet to an inductive power receiver with no connecting wires.

An oscillating electrical potential, or driving voltage, is applied across a primary inductor associated with the inductive power outlet. This produces a varying magnetic field in the vicinity of the primary inductor. When the inductive receiver is brought near to the inductive outlet, a secondary potential difference, or output voltage, is generated across a secondary inductor positioned within this varying magnetic field. The output voltage may be used to charge or power electrical devices wired to the secondary inductor.

Systems for regulating inductive power transmission may utilize regulating mechanisms associated with the inductive power receiver or associated with the inductive power outlet.

An inductive power transfer system as defined by the preamble portions of claims 1 and 2 is known from WO2011/036659A2 and from US2010/0066176 A1.

In order to maintain a stable operating voltage for an electrical device it is necessary to regulate the output voltage from the secondary inductor. Regulation of the output voltage may be provided by monitoring the output voltage, providing feedback signals from the receiver to the outlet and controlling the driving voltage accordingly.

There is a need for a regulation system which may provide continuous regulation of power over an operating range. The disclosure herein addresses this need.

This technical problem is solved by inductive power transfer systems as defined by claims 1 and 2. Advantageous embodiments are indicated in further claims.

For a better understanding of the invention and to show how it may be carried into effect, reference will now be made, purely by way of example, to the accompanying drawings.

With specific reference now to the drawings in detail, it is stressed that the particulars shown are by way of example and for purposes of illustrative discussion only, and are presented in the cause of providing what is believed to be the most useful and readily understood description of the principles and conceptual aspects of the embodiments. In this regard, no attempt is made to show structural details of the embodiments in more detail than is necessary for a fundamental understanding; the description taken with the drawings making apparent to those skilled in the art how the several forms of the invention may be embodied in practice. In the accompanying drawings:

Figs. 1A and IB schematically represent an inductive power transmission system including an inductive power outlet and an inductive power receiver;
Figs. 1C-E illustrate three possible inductive power adaptors for use as inductive power receivers in an inductive power transmission system;
Figs. 2 is a block diagram showing a possible configuration of selected components of inductive power transmission systems incorporating frequency modulation units for regulating power provided to an electrical load;
Fig. 3A is a graph showing the profile of output voltage induced in a secondary inductor over a range of transmission frequencies for an LC circuit having a fixed natural frequency and how the output voltage may be altered by adjusting transmission frequency of input voltage across a primary inductor;
Fig. 3B is a graph showing the output voltage profile of an LC circuit for a fixed transmission frequency may be altered by adjusting natural frequency of the circuit and how the output voltage may be altered accordingly;
Fig. 4 is a flowchart of a method for regulating inductive power transfer using a receiver based regulator;
Figs. 5A and 5b schematically represent inductive transfer systems including possible frequency modulation coils operable to modify the magnetic permeability of the magnetic flux guide;
Figs 6A-C schematically represent a piezoelectric crystal element which may be used as a dimension modifier in various frequency modulators of the disclosure;
Fig. 7A-C schematically represents a frequency modulator incorporating a spacer configured to shift an inductive coil along the axis of a magnetic core so as to adjust the natural frequency of an inductive circuit;
Figs. 8A and 8B schematically represent two possible frequency modulators incorporating a dimension modifier configured to shift parallel plates of capacitors so as to adjust the natural frequency of an LC circuit; and
Fig 9 represents a third variable capacitor.

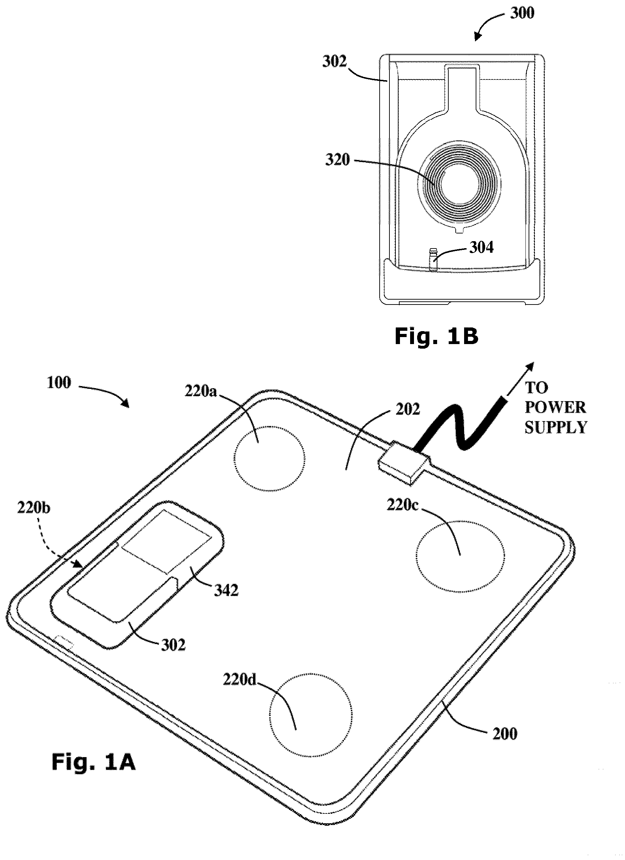

Reference is now made to Figs. 1A and 1B showing an inductive power transmission system 100. The transmission system 100 includes an inductive power outlet 200 and an inductive power receiver 300. The inductive power outlet 200 is configured to transmit power to the inductive power receiver 300 wirelessly using electromagnetic induction.

The inductive power outlet 200 of the example, which is presented for illustrative purposes only, consists of four primary inductors 220a-d incorporated within a platform 202. The inductive power receiver 300 includes a secondary inductor 320 incorporated within a case 302 for accommodating a mobile telephone 342. When a mobile telephone 342 is placed within the case 302 a power connector 304 electrically connects the secondary inductor 320 with the mobile telephone 342. As shown in Fig. 1A, the inductive power receiver 300 may be placed upon the platform 202 in alignment with one of the primary inductors 220b so that the secondary inductor 320 inductively couples with the primary inductor 220b.

It is noted that in alternative embodiments, inductive power receivers 200 may be otherwise configured, for example being incorporated within powerpacks for charging power cells or being wired directly to electrical loads 340 for powering such loads directly. In still other embodiments of the inductive power receiver, dedicated inductive power adaptors are provided for connecting to electrical devices by power cables which may be hard wired to the adaptor or connectable via a conductive pin- and-socket connector.

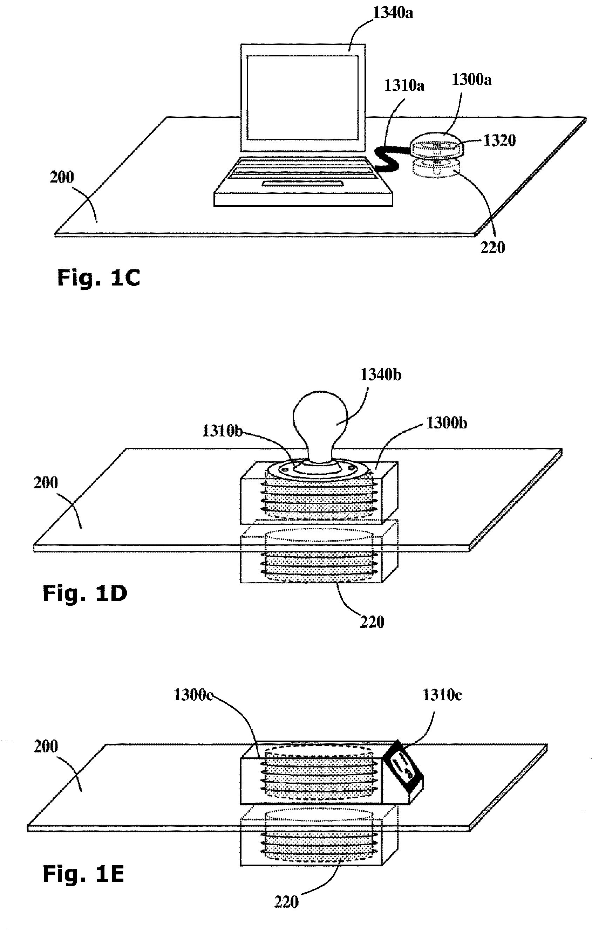

Figs. 1C, 1D and 1E show three alternative power adaptors 1300a-c according to embodiments of the inductive power receiver 300. Fig. 1C shows a first inductive power adaptor 1300a connected to a computer 1340a via a hardwired power cable 1310a. The first inductive power adaptor 1300a draws power from an inductive power transmitter 200 via a secondary inductor 1320. Fig. 1D shows a second inductive power adaptor 1300b hardwired to a light fitting 1310b for inductively powering a light bulb 1340b. Fig. IE, shows still a third inductive power adaptor 1300c in which a conventional mains-type power socket 1310c is providing for connecting to external electrical device (not shown) via conventional power plugs.

It will be appreciated that various embodiments of the inductive power receiver may be used to provide power to a variety of electrical devices either via adaptors or through the inductive receiver directly into the electrical devices. Thus, for example, inductive receivers may be used to power entertainment equipment such as media players, portable music players, video recorders, DVD players, portable DVD players, radios, cassette players, Walkman®s, CD players, televisions, video players, music centers and the like.

In addition, inductive receivers may be used in the work environment to power office equipment such as computers, telephones, PDAs, dictaphones, mobile communications devices, standing lamps, paper shredders, fans, photocopiers, printers, desk lamps, wireless telephones, mobile telephones, speakers, speaker phones, conference call base units, electric pencil sharpeners, electric staplers, display devices, electronic picture frames, VDUs, projectors, calculators, scanners, fax machines as well as heavy machinery and the like.

Because no conductive connections are required, inductive power transfer is particularly suited for use in wet environments. Thus in some embodiments, inductive power receivers may be used to provide power to devices used in the kitchen such as the cooking appliances, fridges, freezers, washing machines, clothes dryers, ambient lighting units, fans, hot plates, electrically heated mugs, egg beaters, bread-makers, liquidizers, citrus juice extractors, vegetable juicers, food-processors, electric knives, toasters, sandwich toasters, waffle makers, electrical barbecue grills, slow cookers, hot-plates, deep-fat fryers, electrical frying pans, knife sharpeners, domestic sterilizers, kettles, urns, and electrical tin-openers, popcorn makers and magnetic stirrers and the like.

Inductive power receivers are similarly suitable for providing power to devices commonly used in the bathroom environment such as hairdryers, shavers, defoliators, delapidators, heaters, wax-melting equipment, hair curlers, beard trippers, bathroom- scales, lights and radios and such like.

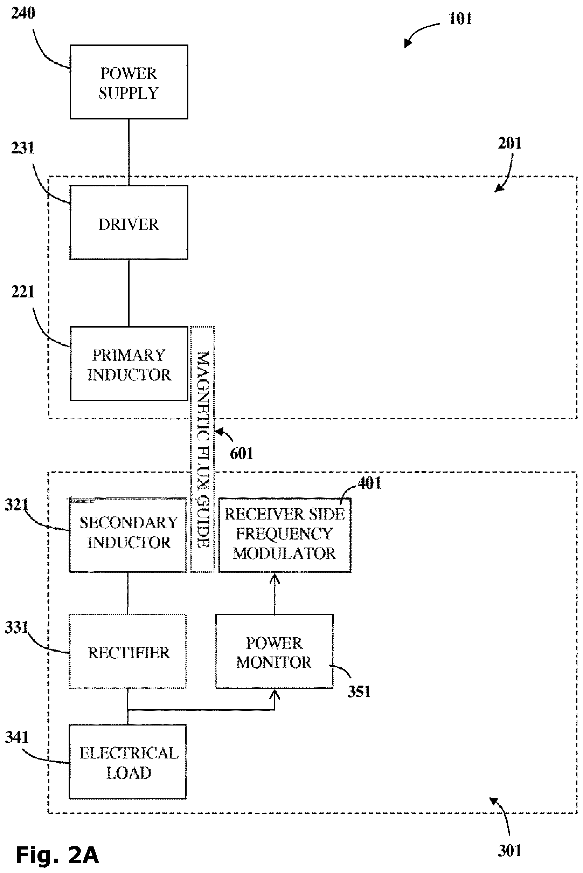

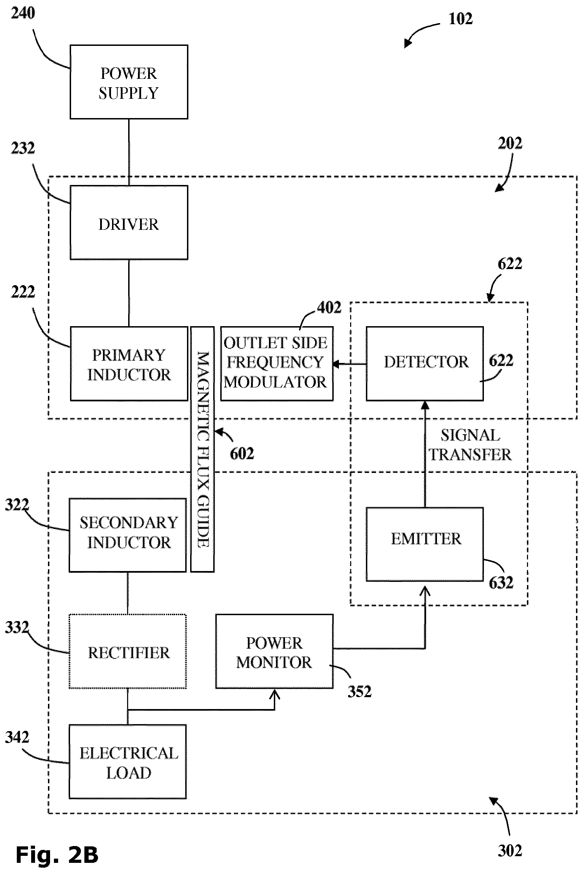

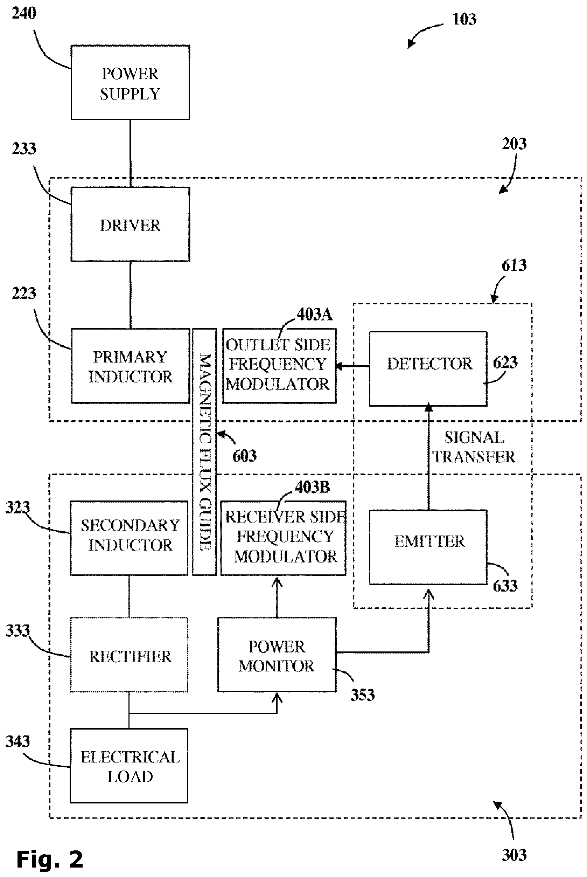

Referring now to the block diagrams of Figs. 2 a possible configuration is represented for selected components of the inductive power transmission system 103, incorporating various frequency modulation units 403 for regulating power provided to an electrical load.

The inductive power transmission system 103 includes an inductive power outlet 203 and an inductive power receiver 303. The inductive power outlet 203 includes a primary inductor 223, wired to a power source 240via a driver 233. It is noted that the inductive power outlet 203 may draw power from a variety of power sources 240, as will occur to those in the art, such as mains power points, power supply transformers, power packs, electrochemical cells, solar cells, fuel cells and the like. The driver 233 typically includes electronic components, such as a switching unit for example, for providing an oscillating electrical potential to the primary inductor 223. The oscillating electrical potential across the primary inductor 223 produces an oscillating magnetic field in its vicinity.

The inductive power receiver 303 includes a secondary inductor 323 wired to an electric load 343 , typically via a rectifier 333 , a power monitor 353 and a receiver side frequency modulator 403. The secondary inductor 323 is configured such that, when placed in the oscillating magnetic field of an active primary inductor 223, a secondary voltage is induced across the secondary inductor 323. Optionally a magnetic flux guide 603 may be provided to improve inductive coupling between the primary inductor 223 and the secondary inductor 323. The secondary voltage may be used to power the electric load 343. It is noted that an induced secondary voltage across the secondary inductor 323 produces an alternating current (AC). Where the electric load 343 requires direct current (DC), such as for charging electrochemical cells, the rectifier 333 may be provided to convert AC to DC. Where AC output is required, such as in the inductive power adaptor 1300c (Fig. IE) used for providing a mains-type output, an AC- AC converter (not shown) may be further provided.

The receiver side frequency modulator 403B is operable to adjust the natural frequency of the inductive power transmission system 103. For example, the frequency modulator 403B may variously effect the natural frequency by altering the dimensions of the secondary inductor 323, altering the permeability of the magnetic flux guide 603, changing the inductance or capacitance of the reception circuit or otherwise adjusting resonant frequency of the inductive system. Various examples of frequency modulators are described herein which may be used as receiver side frequency modulators 403B in such an inductive power transfer system 103.

The power monitor 353 and receiver side frequency modulator 403 may be used in combination to regulate the power delivered to the electric load 343. The power monitor 353 is configured to directly monitor the output voltage produced by the secondary inductor 323 and to compare the monitored output value with the operating voltage required by the electric load 343. The receiver side frequency modulator 403B may be operable to bring the monitored output voltage closer to the required operating voltage of the electric load 343 by adjusting the natural frequency of the inductive transmission system 103. Optionally the monitor may be further configured to monitor additional operating parameters, such as temperature, current and the like.

The inductive power transmission system 103 includes a signal transfer system 613 providing a communication channel between the inductive power outlet 203 and the inductive power receiver 303. It is noted that the inductive outlet 203 further includes an outlet side frequency modulator unit 403A, for adjusting the natural frequency of the inductive power transmission system 103,and a signal detector 623.

The inductive power receiver 303 further includes a signal emitter 633 for sending signals to the signal detector 623.

The power monitor 353, the signal transfer system 613 and outlet side frequency modulator 403A may be used in combination to regulate the power delivered to the electric load 343. The power monitor 353 is configured to directly monitor the output voltage produced by the secondary inductor 323 and to compare the monitored output value with the operating voltage required by the electric load 343. The signal transfer system 613 may be used to communicate signals between the inductive power receiver 303 and the inductive power outlet 203 pertaining to power regulation. Accordingly, the outlet side frequency modulator 403A may be operable to bring the monitored output voltage closer to the required operating voltage of the electric load 343 by adjusting the natural frequency of the inductive transmission system 103. Where appropriate, the signal transfer system 613 may communicate instruction signals to the inductive power outlet such as described, for example, in US 8981598 B2.

It is noted that various signal transfer systems 613 may be used such as combinations of optical, inductive, ultrasonic signal emitters or the like and their associated detectors as well as coil-to-coil signal transmission systems. It is particularly noted that although a separate emitter 633 and secondary inductor 323 are indicated in the block diagram, the secondary inductor 323 may itself serve as a signal emitter. Similarly, although a separate detector 623 and primary inductor 223 are indicated in the block diagram, the primary inductor 223 may itself serve as a signal detector. Such a coil-to-coil signal transmission system is described for example in US 2010/0072825 A1.

Furthermore, the signal transfer system may additionally be used to communicate other signals for a variety of functions such as inter alia, confirming the presence of a power receiver 303, communicating an identification signal or for communicating required power transmission parameters. The latter being particularly useful in systems adapted to work at multiple power levels.

It is particularly noted that the inductive outlet 203 includes an outlet side frequency modulator unit 403A and the inductive receiver 303 includes an outlet side frequency modulator unit 403B for adjusting the natural frequency of the inductive power transmission system 103. Accordingly, the power monitor 353, the signal transfer system 613, the outlet side frequency modulator 403 A, and the receiver side frequency modulator 403B may be used in combination to regulate the power delivered to the electric load 343.

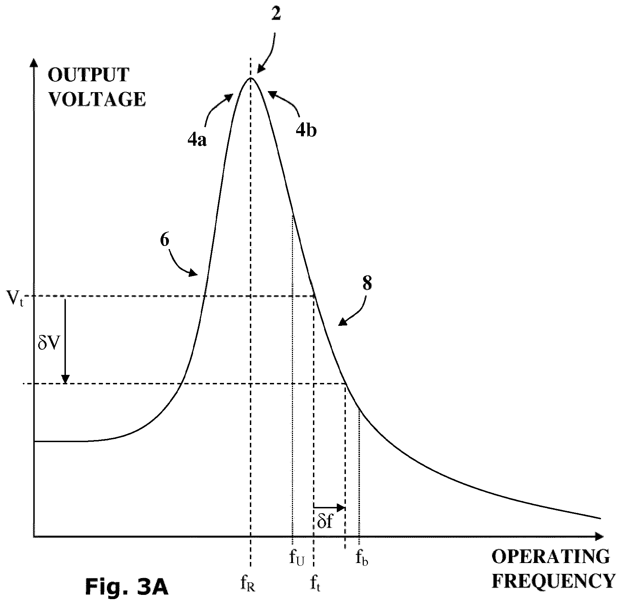

Reference is now made to the graph of Fig. 3A. The graph demonstrates the profile of output voltage induced in a secondary inductor over a range of transmission frequencies for an LC circuit having a fixed natural frequency $f_R$. The profile demonstrates how the output voltage may be altered by adjusting transmission frequency ft of input voltage across a primary inductor.

The strength of an induced voltage in the secondary inductor of an inductive couple varies according to the oscillating frequency of the electrical potential provided to the primary inductor. The induced voltage is strongest when the oscillating frequency equals the resonant frequency of the system. The resonant frequency fR depends upon the inductance L and the capacitance C of the system according to the equation

$$f_R = \frac{1}{2\pi\sqrt{LC}}.$$

The amplitude of the voltage is at its highest when the transmission frequency is equal to the resonant frequency $f_R$ of the system, this maximum amplitude is known as the resonance peak 2. It is further noted that the slope of the graph is steepest in the regions 4a, 4b to either side of the resonance peak 2. Thus, in inductive transfer systems, which operate at or around resonance, a small variation in frequency results in a large change in induced voltage. Similarly, a small change in the resonant frequency of the system results in a large change in the induced voltage. For this reason, resonant inductive transfer systems may be very sensitive to small fluctuations in environmental conditions or variations in alignment between the induction coils.

In non-resonant inductive transfer systems, such as described in US 2010/0072825 A1, the transmission frequency may be used to regulate the inductive power transfer. The transmission frequency may be selected to lie within one of the near-linear regions 6, 8 where the slope of the frequency-amplitude graph is less steep. For example, the frequency of transmission ft may be selected to be in the approximately linear region 8 of the curve between a lower frequency value of $f_L$ and an upper frequency value of $f_U$ Accordingly, the transmission frequency ft, higher than the resonant frequency $f_R$ of the system, produces an induced voltage of Vt. The induced voltage may be increased by reducing the transmission frequency and the induced voltage may be reduced by increasing the transmission frequency. For example, an increase in transmission frequency of $\delta f$ produces a decrease in induced voltage of $\delta V$.

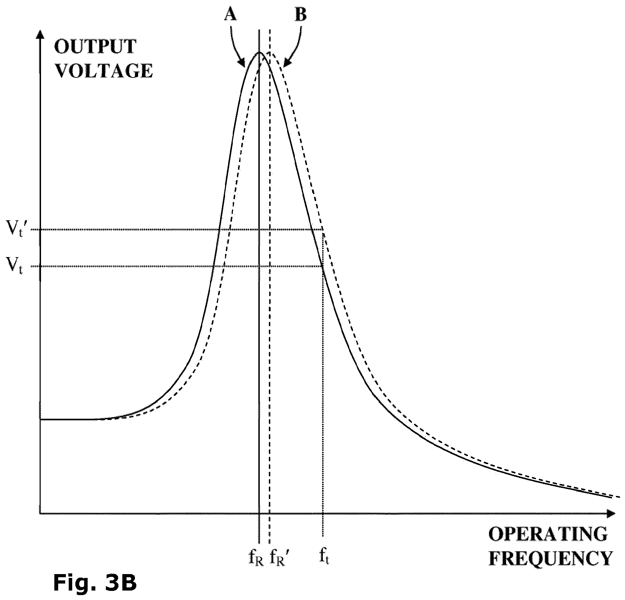

In other non-resonant inductive transfer systems, induced power may be regulated by adjusting the natural frequency of the LC circuit for a fixed transmission frequency. Referring now to the graph of Fig. 3B, the shift in output voltage profile of an LC circuit is illustrated when the natural frequency of the system is altered from a lower value $f_R$ to a higher value $f_R$'. The output voltage peaks when the operating frequency is equal to the natural frequency $f_R$, $f_R$' of the system. The full line A represents the voltage profile for the reception circuit with no resonance-altering component connected. The dashed line B represents the voltage profile for the reception circuit with a resonance-altering component connected such that the resonant frequency of the system increases from $f_R$ to $f_R$'. Such an increase may be effected, for example, by using a frequency modulator such as described herein above in reference to Fig. 2.

It is noted that, for a transmission frequency ft above the resonant frequency $f_R$ of the system, the output voltage Vt may be increased by increasing the resonant frequency of the system. Thus, if a frequency modulator increases the natural frequency of the system, an output voltage at a certain value Vt may rise to a higher value Vt'. Similarly, if a frequency modulator decreases the natural frequency of the system, the voltage profile may be shifted down and the output voltage may decrease. A power regulator may therefore use a frequency modulator to regulate induced power.

The embodiments described in relation to Fig. 3B relate to inductive power transmission systems which operate at a transmission frequency $f_R$ higher than the resonant frequency ft of the system. It will be appreciated that other embodiments may operate at transmission frequencies lower than the resonant frequency ft of the system. Where the operating frequency is lower than the resonant frequency $f_R$, the regulator may be configured to introduce resonance reducing elements into the reception circuit in order to increase the output voltage and introduce resonance increasing elements into the reception circuit in order to reduce the output voltage.

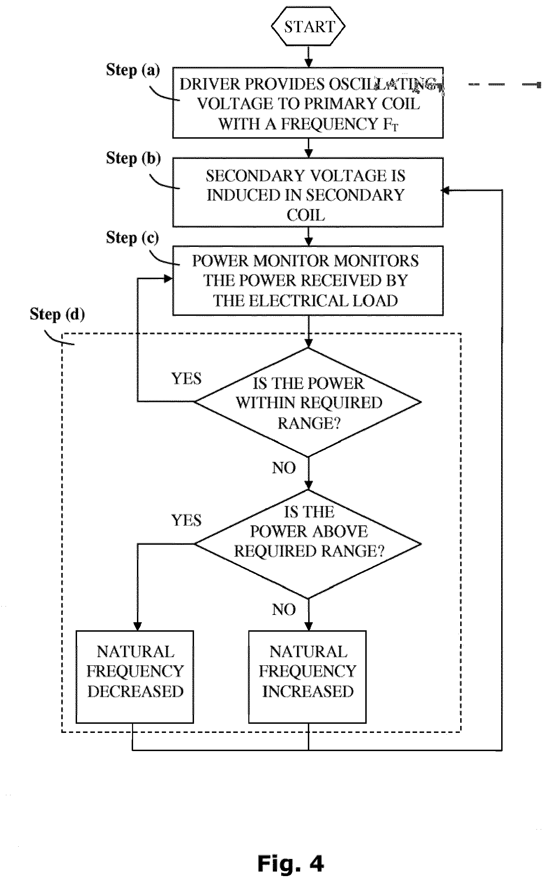

By way of illustration, the flowchart of Fig. 4 represents a possible method for regulating inductive power transfer using a frequency modulator. The method includes: driving a primary inductor at a transmission frequency significantly different from a first resonant frequency of the inductive power transfer system - step (a), inducing a secondary voltage across a secondary inductor associated with the reception circuit - step (b), monitoring the output voltage from the reception circuit - step (c).

The monitored power may be compared to a required range - step (d). For example, a power monitor may compare the power delivered to the electric load to predetermined reference values or to reference values calculated on the fly according to varying requirements of the load. If the power lies within a required range then the natural frequency is not adjusted and the monitor continues to monitor the output voltage. If the power does not lie within the required range the frequency modulator may be used to adjust the natural frequency of the LC circuit as required.

For example, if the output voltage drops below a first reference value, a first resonance-altering component to the reception circuit may be introduced such that the resonant frequency of the inductive power transfer system shifts closer to the transmission frequency, whereas if the output voltage rises above a second reference value, a second resonance-altering component may be introduced such that the resonant frequency of the inductive power transfer system shifts away from the transmission frequency. Alternatively, or additionally, the frequency modulator may disconnect the secondary inductor from the reception circuit as required.

Referring back to Fig. 2, it is noted that various frequency modulation units 403 may be incorporated into the system in order to adjust the natural frequency, discretely or continuously, in order to regulate the power provided to the electric load 343. In order to better describe the disclosure and for illustrative purposes a number of embodiments of the frequency modulation units are described below. It is to be understood that other frequency modulation units may be alternatively used as suit requirements.

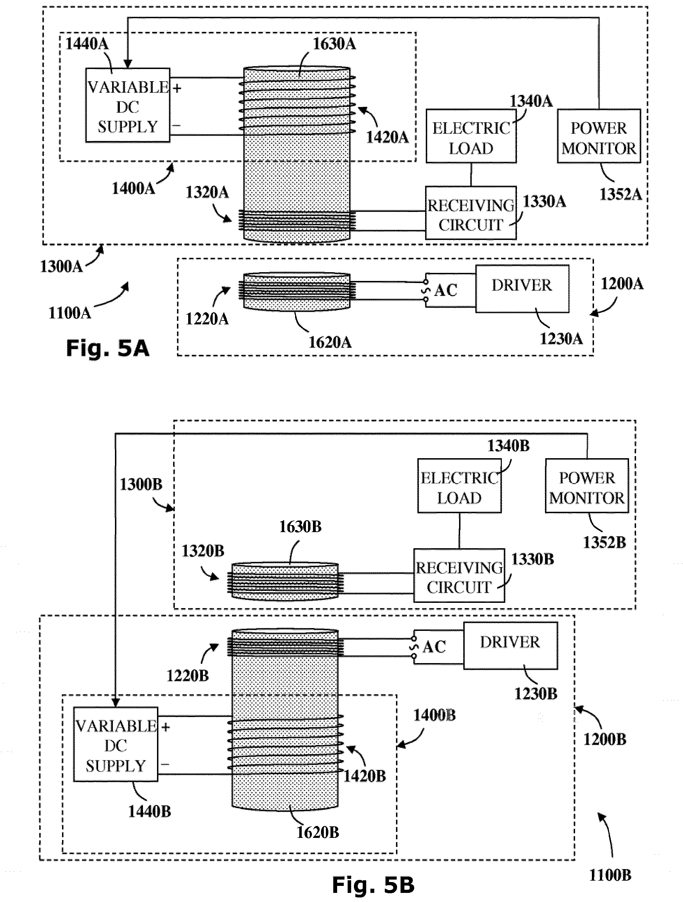

Referring now to Figs. 5A and 5B, schematic representations are presented of embodiments of inductive transfer systems which include frequency modulation coils 1420 A, 1420B operable to modify the magnetic permeability of the magnetic flux guide between the primary and secondary inductors.

With particular reference to Fig. 5A, an inductive transfer system 1100A is presented including a receiver side frequency modulator 1400 A. The inductive transfer system 1100A includes an inductive outlet 1200A and an inductive receiver 1300A. The inductive outlet 1200A comprises a driver 1230A operable to produce an alternating current potential across a primary inductor 1220A. The primary inductor 1220 A may be wound around a first ferromagnetic core 1620A which forms a primary side flux guide for shaping the magnetic field produced by the primary inductor and directing the flux lines towards the secondary inductor 1320A of the inductive receiver 1300 A. The inductive receiver 1300A comprises a secondary inductor 1320 A, a second ferromagnetic core 1630 A, a receiving circuit 1330 A, an electric load 1340A, a power monitor 1352A and a receiver side frequency modulator 1400A. The secondary inductor 1320 A may be wound around the second ferromagnetic core 1630 A which forms a secondary flux guide directing magnetic flux from the primary inductor 1220A therethrough. The electric load 1340A is wired to the secondary inductor 1320A and is operable to draw power therefrom via the receiving circuit 1330 A, which may include inter alia a rectifier unit, smoothing capacitors and such like. The power monitor 1352A is operable to monitor power received by the electric load 1340A and to control the receiver side frequency modulator 1400A to regulate power delivered to the electric load 1340 A by adjusting the permeability of the secondary ferromagnetic core 1630A.

It is noted that the inductance of the coupled system depends upon the inductance of the primary inductor and the inductance of the secondary inductor. The inductance of a solenoid, such as the primary inductor or secondary inductor depends upon the relative permeability of the magnetic core. It is noted that the receiver side frequency modulator 1400A is operable to adjust the natural frequency of the coupled system by altering the permeability of the secondary flux guide 1630A.

The receiver side frequency modulator 1400A includes a receiver side frequency modulation coil 1420A and a variable DC power supply 1440A. The receiver side frequency modulation coil 1420 A is wound around the secondary flux guide 1630A and wired to the variable DC power supply 1440A. It is noted that by applying a DC potential across the receiver side frequency modulation coil 1420A, the effective permeability of the flux guide may be altered. This may occur at least in part because the flux guide may become magnetically saturated thereby.

Accordingly, the DC potential may be adjusted in response to input from the power monitor such that the natural frequency of the system may be altered. As described herein, the power provided to the electric load may therefore be regulated by thus altering the natural frequency of the coupled system.

It is particularly noted that a continuous variable DC supply may be used together with the frequency modulation coil 1420A to provide continuous modulation of the natural frequency over an operating range. Alternatively, or additionally, the frequency modulation coil 1420A may provide discrete modulation where this may suit requirements.

Referring now to Fig. 5B, an alternative inductive transfer system 1100B is presented including an outlet side frequency modulator 1400B. The inductive transfer system 1100B includes an inductive outlet 1200B and an inductive receiver 1300B. The inductive outlet 1200B comprises a driver 1230B operable to produce an alternating current potential across a primary inductor 1220B and an outlet side frequency modulator 1400B operable to modulate the natural frequency of the coupled system. The primary inductor 1220B may be wound around a first ferromagnetic core 1620B which forms a primary side flux guide for shaping the magnetic field produced by the primary inductor and directing the flux lines towards the secondary inductor 1320B of the inductive receiver 1300B. The inductive receiver 1300B comprises a secondary inductor 1320B, a second ferromagnetic core 1630B, a receiving circuit 1330B, an electric load 1340B, a power monitor 1352B. The secondary inductor 1320B may be wound around the second ferromagnetic core 1630B which forms a secondary flux guide directing magnetic flux from the primary inductor 1220B therethrough. The electric load 1340B is wired to the secondary inductor 1320B and is operable to draw power therefrom via the receiving circuit 1330B, which may include inter alia a rectifier unit, smoothing capacitors and such like. The power monitor 1352B is operable to monitor power received by the electric load 1340B and to communicate with the outlet side frequency modulator 1400B, for example via a communication channel such as a signal transfer system 613 (Fig. 2) or the like, in order to regulate power delivered to the electric load 1340B by adjusting the permeability of the primary ferromagnetic core 1620B.

It is noted that the outlet side frequency modulator 1400B is operable to adjust the natural frequency of the coupled system by altering the permeability of the secondary flux guide 1620B.

The outlet side frequency modulator 1400B may include an outlet side frequency modulation coil 1420B and a variable DC power supply 1440B. The outlet side frequency modulation coil 1420B may be wound around the primary flux guide 1620B and wired to the variable DC power supply 1440B. It is noted that by applying a DC potential across the receiver side frequency modulation coil 1420B, the effective permeability of the flux guide may be altered. Accordingly, the DC potential may be adjusted in response to input from the power monitor such that the natural frequency of the system may be altered. As described herein, the power provided to the electric load may therefore be regulated by thus altering the natural frequency of the coupled system.

As noted above, frequency modulators may be operable to effect the natural frequency by altering the configuration or dimensions of elements, such as inductors or capacitors of the LC circuit of the coupled system. Accordingly, a configuration modifier may be introduced, for example, to adjust the distance between the primary and secondary inductors. Where appropriate the primary inductor may be mounted upon a travelling platform operable to shift the primary inductor radially, longitudinally or laterally relative to the secondary inductor.

Additionally or alternatively, a dimension modifier may be introduced to alter the dimensions of the inductors, capacitors or their configuration in the system. Various dimension modifiers may be used as suit requirements, for example, a dimension modifier may be any element operable to adjust the dimensions of the system in response to electrical signals such as motors, actuators, piezoelectric element, electric field generators, bimetallic strips or the like.

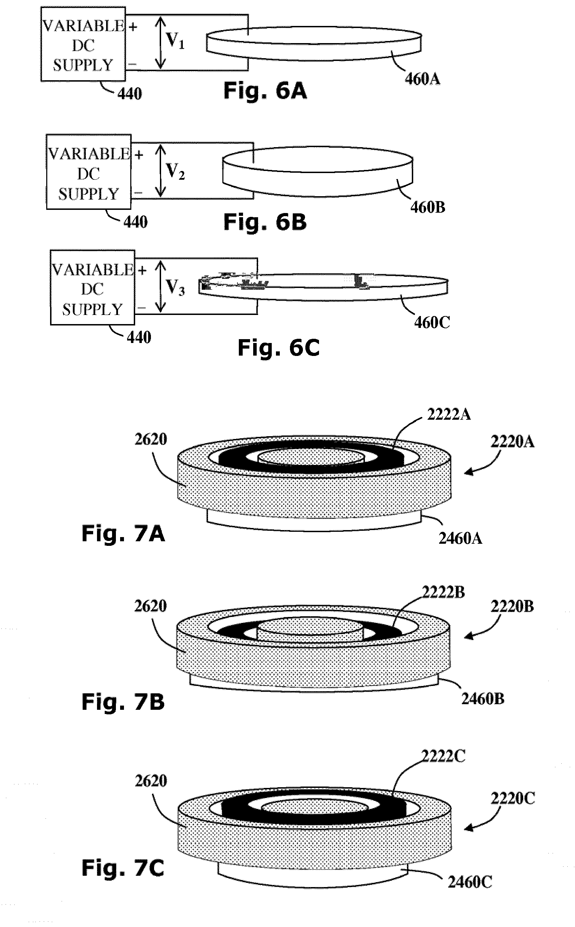

By way of example only, such dimension adjustments may be effected using a piezoelectric crystal configured to change shape depending upon a potential difference applied thereacross. Figs 6A-C illustrate such a piezoelectric crystal element 460A-C in a variety of configurations. Piezoelectric crystal elements such as this may be used as dimension modifiers in various frequency modulators.

Figs 6A-C show the piezoelectric element 460A wired to a variable DC supply 440. The dimensions of the piezoelectric element 460A change as the variable DC supply 440 applies different voltages thereacross. Accordingly, as illustrated in Fig. 6A, the crystal may have a first width and thickness when a first voltage $V_1$ is applied thereacross. As shown in Fig. 6B, the width may be reduced and thickness increased by applying a second voltage $V_2$ thereacross. As shown in Fig. 6C, the width may be increased and thickness decreased by applying a third voltage $V_3$ thereacross.

Referring now to Figs. 7A-C, a variable inductor 2220A-C is illustrated incorporating a dimension modifier 2460A-C such as a piezoelectric element or the like. Such a variable inductor 2220A-C may be incorporated into a frequency modulator such as described herein and used to modulate the natural frequency of the system so as to regulate power transfer to an electric load as described hereinabove. The variable inductor 2220A-C includes an inductive coil 2222A-C and a flux guide 2620, such as a ferromagnetic core or the like. The inductive coil 2222A-C may be coupled to the dimension modifier 2460A-C such that as the dimensions of the dimension modifier 2460A-C are adjusted, the inductive coil 2222A-C moves relative to the flux guide 2620, thereby altering the inductance of the variable inductor 2220A-C.

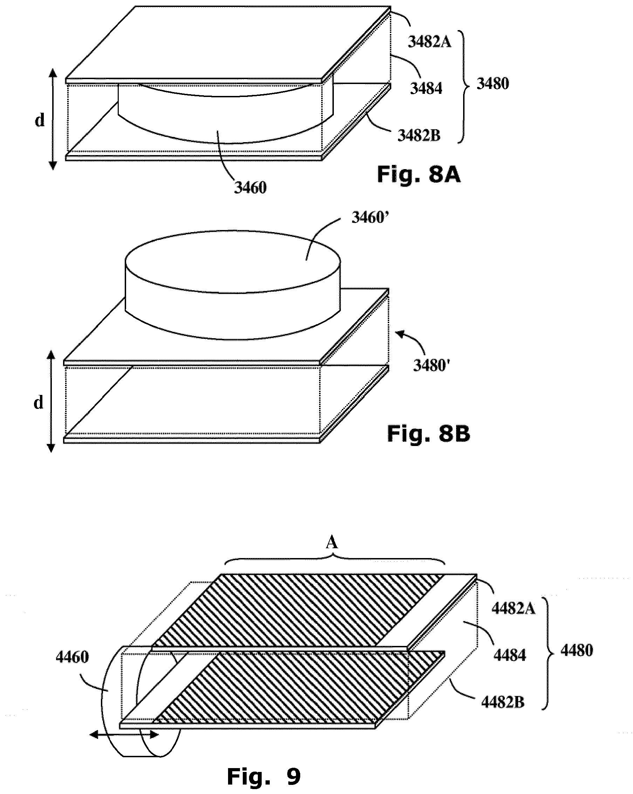

Referring now to Fig. 8A, a first variable capacitor 3480 is illustrated incorporating a dimension modifier 3460 such as a piezoelectric element or the like. Such a variable capacitor 3480 may be incorporated into a frequency modulator such as described herein and used to modulate the natural frequency of the system so as to regulate power transfer to an electric load as described hereinabove.

The variable capacitor 3480 includes two electrode plates 3482A, 3482B separated by a dielectric layer 3484 and a dimension modifier 3460. The dimension modifier 3460 may be used to control the separation distance d between the electrode plates and may be adjusted as required. Optionally, the dimension modifier 3460 may be introduced into the gap between the electrode plates 3482A, 3482B, for example where the dielectric layer 3484 itself comprises a dimension modifying material.

Referring now to Fig. 8B, alternatively, or additionally, a second variable capacitor 3480' is illustrated incorporating a dimension modifier 3460' as shown in Fig. 8B. The dimension modifier 3460' of the second variable capacitor 3480' is positioned outside the electrode plates and coupled thereto so as to adjust the separation distance d as required.

With reference to Fig. 9, a third variable capacitor 4480 is represented incorporating a dimension modifier 4460 such as a piezoelectric element or the like. The third variable capacitor 4480 may be incorporated into a frequency modulator such as described herein and used to modulate the natural frequency of the system so as to regulate power transfer to an electric load as described hereinabove.

The third variable capacitor 4480 includes two electrode plates 4482A, 4482B separated by a dielectric layer 4484 and a dimension modifier 4460. The dimension modifier 4460 may be coupled to one of the electrode plates 4482B such that it may be shifted laterally relative to the other plate 4482A thereby controlling the overlapping area A of the electrode plates. Accordingly, the capacitance of variable capacitor may be adjusted as required.

## Claims

1. An inductive power transfer system (103) comprising:

   an inductive power outlet (203) for providing induced power to at least one electric load (343) via at least one inductive power receiver 303), said inductive power outlet (203) comprising:

   at least one primary inductor (223) for forming an inductive couple with at least one secondary inductor (323) of the at least one inductive power receiver (300);
   a driver (233) configured to provide a driving voltage across the primary inductor (223), the driving voltage oscillating at a transmission frequency significantly different from the inductive couple natural frequency;
   the inductive power transfer system further comprising a signal transfer system (613) configured to communicate instruction signals to the inductive power outlet, the signal transfer system comprising a signal detector (623) operable to receive the instruction signals from a signal emitter (633) associated with the inductive power receiver (303) during power transfer; and

at least one outlet-side frequency modulator (403A); and

an inductive power receiver (303) for providing power to an electric load (343), said inductive power receiver (303) comprising:

at least one secondary inductor (323) for forming an inductive couple with said primary inductor (223) associated with said inductive power outlet (203);

at least one power monitor (353) operable to monitor output power of the secondary inductor (323); and

a receiver-side frequency modulator (403B);

wherein the receiver-side frequency modulator and/or the at least one outlet-side frequency modulator are capable of adjusting natural frequency of the inductive couple in order to regulate the induced power to the at least one electric load, said frequency modulator (403A, 403B) comprising at least of component selected from a group comprising of at least one variable capacitor (3480, 4480) and at least one variable inductor (2220A-C) and a combination thereof

**characterized in that**

said adjusting the natural frequency is **characterized by** modifying the physical dimensions of the at least one component.

2. An inductive power transfer system (103) comprising:

an inductive power outlet (203) for providing induced power to at least one electric load (343) via at least one inductive power receiver (303), said inductive power outlet (203) comprising:

at least one primary inductor (223) for forming an inductive couple with at least one secondary inductor (323) of the at least one inductive power receiver (300);

a driver (233) configured to provide a driving voltage across the primary inductor (223), the driving voltage oscillating at a transmission frequency significantly different from the inductive couple natural frequency;

the inductive power transfer system further comprising a signal transfer system (613) configured to communicate instruction signals to the inductive power outlet, the signal transfer system comprising a signal detector (623) operable to receive the instruction signals from a signal emitter (633) associated with the inductive power receiver (303) during power transfer; and

at least one outlet-side frequency modulator (403A); and

an inductive power receiver (303) for providing power to an electric load (343), said inductive power receiver (303) comprising:

at least one secondary inductor (323) for forming an inductive couple with said primary inductor (223) associated with said inductive power outlet (203);

at least one power monitor (353) operable to monitor output power of the secondary inductor (323); and

a receiver-side frequency modulator (403B);

wherein the receiver-side frequency modulator and/or the at least one outlet-side frequency modulator are capable of adjusting natural frequency of the inductive couple in order to regulate the induced power to the at least one electric load, said frequency modulator (403A, 403B) comprising at least one frequency modulation coil (1420A, 1420B),

**characterized in that**

said adjusting the natural frequency is **characterized by** modifying the magnetic permeability of at least one magnetic flux guide (1620A, 1620B, 1630A, 1630B).

3. The inductive power transfer system of claim 1 wherein the frequency modulator (403) comprises at least one dimension modifier (2460A-C) configured to modify the dimensions of at least one inductor.

4. The inductive power transfer system or the inductive power outlet of claim 3 wherein the dimension modifier (2460A-C) is configured to adjust distance between an inductive coil (2222A-C) and a ferromagnetic core (2620).

5. The inductive power transfer system of claim 1 wherein the frequency modulator (403) comprises at least one dimension modifier (3460, 3460', 4460) configured to modify the dimensions of at least one capacitor (3480, 3480', 4480).

6. The inductive power transfer system of claim 5 wherein the dimension modifier (3460) comprises at least one piezoelectric crystal (460) wired to a variable direct current supply (440) and coupled to at least one capacitive plate (3482A, 3482B, 4482A, 4482B) of the capacitor (3480, 4480) such that the distance between the capacitive plates is adjusted when the direct current supply is varied.

7. The inductive power transfer system of claim 2 wherein said at least one magnetic flux guide (1620A, 1630A, 1620B, 1630B) is configured for directing magnetic flux from the primary inductor (1220A, 1220B) to the secondary inductor (1320A, 1320B), wherein the frequency modulator (1400A, 1400B) comprises at least one modulation coil (1420A, 1420B) wired to a variable direct current supply (1440A, 1440B) and operable to modify magnetic permeability of the magnetic flux guide (1620A, 1630A, 1630A, 1630B).

8. The inductive power transfer system of claim 1 further comprising at least one magnetic flux guide (2620) for directing magnetic flux from the primary inductor (223) to the secondary inductor (323) wherein the frequency modulator (403A, 403B) comprises at least one dimension modifier (460, 2460A-C) configured to adjust the dimensions between the flux guide (2620) and at least one of the primary inductor (223) and the secondary inductor (323).

9. The inductive power transfer system of claim 8 wherein the dimension modifier (460, 2460A-C) comprises at least one piezoelectric crystal (440) coupled to the flux guide (2620) and the secondary inductor (323) and wired to a variable direct current supply (440) such that the distance between the flux guide (2620) and the inductor is adjusted when the direct current supply is varied.

10. The inductive transfer system outlet of claims 1 and 2, wherein the signal detector (623) comprises the primary inductor (223) operable to detect signals emitted by the secondary inductor (323) as a coil-to-coil signal transmission system.

**Patentansprüche**

1. Induktives Energieübertragungssystem (103), umfassend:
einen induktiven Energiesender (203) zur Versorgung mindestens einer elektrischen Last (343) über mindestens einen induktiven Energieempfänger (303) mit induziertem Strom, wobei der genannte induktive Energiesender (203) umfasst:

   mindestens eine Primärspule (223) zur Herstellung einer induktiven Kopplung mit mindestens einer Sekundärspule (323) des mindestens einen induktiven Energieempfängers (300) ;
   einen Treiber (233), dafür eingerichtet, eine Treiberspannung über die Primärspule (223) zu erzeugen, wobei die Treiberspannung mit einer Übertragungsfrequenz schwingt, die von der Eigenfrequenz der induktiven Kopplung erheblich abweicht,
   wobei das induktive Energieübertragungssystem des Weiteren ein Signalübertragungssystem (613) umfasst, das eingerichtet ist, um Anweisungssignale an den induktiven Energiesender zu kommunizieren, wobei das Signalübertragungssystem einen Signaldetektor (623) umfasst, geeignet zum Empfang der Anweisungssignale von einem Signalsender (633), der dem induktiven Energieempfänger (303) angehört, während der Energieübertragung; und
mindestens einen senderseitigen Frequenzmodulator (403A); sowie
einen induktiven Energieempfänger (303) zur Stromversorgung einer elektrischen Last (343), wobei der genannte induktive Energieempfänger (303) umfasst:

   mindestens eine Sekundärspule (323) zur Herstellung einer induktiven Kopplung mit der genannten Primärspule (223), die dem genannten induktiven Energiesender (203) angehört; mindestens eine Stromüberwachung (353), zur Überwachung des von der Sekundärspule (323) abgegebenen Stromes geeignet; und
   einen empfängerseitigen Frequenzmodulator (403B);
   wobei der empfängerseitige Frequenzmodulator und/oder der mindestens eine senderseitige Frequenzmodulator in der Lage sind, die Eigenfrequenz der induktiven Kopplung einzustellen, um den induzierten Strom für die mindestens eine elektrische Last zu regulieren, wobei der genannte Frequenzmodulator (403A, 403B) mindestens ein Bauteil umfasst, gewählt aus einer Gruppe, bestehend aus mindestens einem veränderlichen Kondensator (3480, 4480) und mindestens einer veränderlichen Spule (2220A-C) und einer Kombination davon, **dadurch gekennzeichnet, dass**
   das genannte Einstellen der Eigenfrequenz durch Änderung der physischen Abmessungen des mindestens einen Bauteils gekennzeichnet ist.

2. Induktives Energieübertragungssystem (103), umfassend:
einen induktiven Energiesender (203) zur Versorgung mindestens einer elektrischen Last (343) über mindestens einen induktiven Energieempfänger (303) mit induziertem Strom, wobei der genannte induktive Energiesender (203) umfasst:

   mindestens eine Primärspule (223) zur Herstellung einer induktiven Kopplung mit mindestens einer Sekundärspule (323) des mindestens einen induktiven Energieempfängers (300) ;
   einen Treiber (233), dafür eingerichtet, eine Treiberspannung über der Primärspule (223) zu erzeugen, wobei die Treiberspannung mit einer Übertragungsfrequenz schwingt, die von der Eigenfrequenz der induktiven Kopplung erheblich abweicht,

wobei das induktive Energieübertragungssystem des Weiteren ein Signalübertragungssystem (613) umfasst, das eingerichtet ist, um Anweisungssignale an den induktiven Energiesender zu kommunizieren, wobei das Signalübertragungssystem einen Signaldetektor (623) umfasst, geeignet zum Empfang der Anweisungssignale von einem Signalsender (633), der dem induktiven Energieempfänger (303) angehört, während der Energieübertragung; und

mindestens einen senderseitigen Frequenzmodulator (403A); sowie

einen induktiven Energieempfänger (303) zur Stromversorgung einer elektrischen Last (343), wobei der genannte induktive Energieempfänger (303) umfasst:

mindestens eine Sekundärspule (323) zur Herstellung einer induktiven Kopplung mit der genannten Primärspule (223), die dem genannten induktiven Energiesender (203) angehört; mindestens eine Stromüberwachung (353), zur Überwachung des von der Sekundärspule (323) abgegebenen Stromes geeignet; und

einen empfängerseitigen Frequenzmodulator (403B);

wobei der empfängerseitige Frequenzmodulator und/oder der mindestens eine senderseitige Frequenzmodulator in der Lage sind, die Eigenfrequenz der induktiven Kopplung einzustellen, um den induzierten Strom für die mindestens eine elektrische Last zu regulieren, wobei der genannte Frequenzmodulator (403A, 403B) mindestens eine Frequenzmodulationsspule (1420A, 1420B) umfasst,

**dadurch gekennzeichnet, dass**

das genannte Einstellen der Eigenfrequenz durch Änderung der magnetischen Permeabilität mindestens eines Leiters des magnetischen Flusses (1620A, 1620B, 1630A, 1630B) gekennzeichnet ist.

3. Induktives Energieübertragungssystem nach Patentanspruch 1, in dem der Frequenzmodulator (403) mindestens einen Abmessungsänderer (2460A-C) umfasst, der dafür eingerichtet ist, die Abmessungen mindestens einer Spule zu ändern.

4. Induktives Energieübertragungssystem oder induktiver Energiesender nach Patentanspruch 3, in dem der Abmessungsänderer (2460A-C) dafür eingerichtet ist, den Abstand zwischen einer Induktionsspule (2222A-C) und einem ferromagnetischen Kern (2620) einzustellen.

5. Induktives Energieübertragungssystem nach Patentanspruch 1, in dem der Frequenzmodulator (403) mindestens einen Abmessungsänderer (3460, 3460', 4460) umfasst, der dafür eingerichtet ist, die Abmessungen mindestens eines Kondensators (3480, 3480', 4480) zu ändern.

6. Induktives Energieübertragungssystem nach Patentanspruch 5, in dem der Abmessungsänderer (3460) mindestens ein piezoelektrisches Kristall (460) umfasst, dass an eine veränderbare Gleichspannungsversorgung (440) angeschlossen und derart mit mindestens einer Kondensatorplatte (3482A, 3482B, 4482A, 4482B) des Kondensators (3480, 4480) verbunden ist, dass der Abstand zwischen den Kondensatorplatten eingestellt wird, wenn die Versorgungsgleichspannung geändert wird.

7. Induktives Energieübertragungssystem nach Patentanspruch 2, in dem der genannte mindestens eine Leiter des magnetischen Flusses (1620A, 1630A, 1620B, 1630B) dafür eingerichtet ist, den magnetischen Fluss von der Primärspule (1220A, 1220B) zur Sekundärspule (1320A, 1320B) zu leiten, wobei der Frequenzmodulator (1400A, 1400B) mindestens eine Modulatorspule (1420A, 1420B) umfasst, die an eine veränderbare Gleichspannungsversorgung (1440A, 1440B) angeschlossen und geeignet ist, die magnetische Permeabilität des Leiters des magnetischen Flusses (1620A, 1630A, 1620B, 1630B) zu ändern.

8. Induktives Energieübertragungssystem nach Patentanspruch 1, umfassend des Weiteren mindestens einen Leiter des magnetischen Flusses (2620) zur Leitung des magnetischen Flusses von der Primärspule (223) zur Sekundärspule (323) zu leiten, wobei der Frequenzmodulator (403A, 403B) mindestens einen Abmessungsänderer (460, 2460A-C) umfasst, der dafür eingerichtet ist, die Abmessungen zwischen dem Leiter des magnetischen Flusses (2620) und mindestens einer von der Primärspule (223) oder der Sekundärspule (323) zu ändern.

9. Induktives Energieübertragungssystem nach Patentanspruch 8, in dem der Abmessungsänderer (460, 2460A-C) mindestens ein piezoelektrisches Kristall (440) umfasst, das mit dem Flussleiter (2620) und der Sekundärspule (323) verbunden und derart an eine veränderbare Gleichspannungsversorgung (440) angeschlossen ist, dass der Abstand zwischen dem Flussleiter (2620) und der Spule eingestellt wird, wenn die Versorgungsgleichspannung geändert wird.

10. Induktives Energieübertragungssystem nach Patentanspruch 1 und 2, in dem der Signaldetektor (623) die Primärspule (223) umfasst, die dazu betrieben werden kann, als Signalübertragungssystem von Spule zu Spule Signale festzustellen, die von der Sekundärspule (323) gesendet werden.

**Revendications**

1. Système de transfert de puissance inductive (103) comprenant :
une sortie de puissance inductive (203) pour fournir une puissance induite à au moins une charge électrique (343) par l'intermédiaire d'au moins un récepteur de puissance inductive (303), ladite sortie de puissance inductive (203) comprenant :

   au moins un inducteur primaire (223) pour former un couple inductif avec au moins un inducteur secondaire (323) du au moins un récepteur de puissance inductive (300) ;
   un pilote (233) configuré pour fournir une tension de pilotage au travers de l'inducteur primaire (223), la tension de pilotage oscillant à une fréquence de transmission sensiblement différente de la fréquence naturelle du couple inductif ;
   le système de transfert de puissance inductive comprenant en outre un système de transfert de signaux (613) configuré pour communiquer des signaux d'instruction à la sortie de puissance inductive, le système de transfert de signaux comprenant un détecteur de signal (623) utilisable pour recevoir les signaux d'instruction d'un émetteur de signaux (633) associé au récepteur de puissance inductive (303) pendant le transfert de puissance ; et
   au moins un modulateur de fréquence côté sortie (403A) ; et
   un récepteur de puissance inductive (303) pour fournir de la puissance à une charge électrique (343), ledit récepteur de puissance inductive (303) comprenant :

      au moins un inducteur secondaire (323) pour former un couple inductif avec ledit inducteur primaire (223) associé à ladite sortie de puissance inductive (203) ;
      au moins un moniteur de puissance (353) utilisable pour contrôler la puissance de sortie de l'inducteur secondaire (323) ; et
      un modulateur de fréquence côté récepteur (403B) ;
      le modulateur de fréquence côté récepteur et/ou le au moins un modulateur de fréquence côté sortie étant capables d'ajuster la fréquence naturelle du couple inductif pour réguler la puissance induite à la au moins une charge électrique, ledit modulateur de fréquence (403A, 403B) comprenant au moins un composant sélectionné dans un groupe comprenant au moins un condensateur variable (3480, 4480) et au moins un inducteur variable (2220A-C) et une combinaison de ceux-ci, **caractérisé en ce que**
ledit ajustement de la fréquence naturelle est **caractérisé par** la modification des dimensions physiques du au moins un composant.

2. Système de transfert de puissance inductive (103) comprenant :
une sortie de puissance inductive (203) pour fournir une puissance induite à au moins une charge électrique (343) par l'intermédiaire d'au moins un récepteur de puissance inductive (303), ladite sortie de puissance inductive (203) comprenant :

   au moins un inducteur primaire (223) pour former un couple inductif avec au moins un inducteur secondaire (323) du au moins un récepteur de puissance inductive (300) ;
   un pilote (233) configuré pour fournir une tension de pilotage au travers de l'inducteur primaire (223), la tension de pilotage oscillant à une fréquence de transmission sensiblement différente de la fréquence naturelle du couple inductif ;
   le système de transfert de puissance inductive comprenant en outre un système de transfert de signaux (613) configuré pour communiquer des signaux d'instruction à la sortie de puissance inductive, le système de transfert de signaux comprenant un détecteur de signal (623) utilisable pour recevoir les signaux d'instruction d'un émetteur de signaux (633) associé au récepteur de puissance inductive (303) pendant le transfert de puissance ; et
   au moins un modulateur de fréquence côté sortie (403A) ; et
   un récepteur de puissance inductive (303) pour fournir de la puissance à une charge électrique (343), ledit récepteur de puissance inductive (303) comprenant :

      au moins un inducteur secondaire (323) pour former un couple inductif avec ledit inducteur primaire (223) associé à ladite sortie de puissance inductive (203) ;
      au moins un moniteur de puissance (353) exploitable pour contrôler la puissance de sortie de l'inducteur secondaire (323) ; et
      un modulateur de fréquence côté récepteur (403B) ;
      le modulateur de fréquence côté récepteur et/ou le au moins un modulateur de fréquence côté sortie étant capables d'ajuster la fréquence naturelle du couple inductif pour réguler la puissance induite à la au moins une charge électrique, ledit modulateur de fréquence (403A, 403B) comprenant au moins une bobine de modulation de fréquence (1420A, 1420B), **caractérisé en ce que** ledit ajustement de la fréquence naturelle est **caractérisé par** la modification de la perméabilité magnétique du au moins un guide de fluide magnétique (1620A, 1620B, 1630A, 1630B).

3.  Système de transfert de puissance inductive selon la revendication 1, le modulateur de fréquence (403) comprenant au moins un modificateur de dimensions (2460A-C) configuré pour modifier les dimensions du au moins un inducteur.

4.  Système de transfert de puissance inductive ou sortie de puissance inductive selon la revendication 3, le modificateur de dimensions (2460A-C) étant configuré pour ajuster la distance entre une bobine inductive (2222A-C) et un noyau ferromagnétique (2620).

5.  Système de transfert de puissance inductive selon la revendication 1, le modulateur de fréquence (403) comprenant au moins un modificateur de dimensions (3460, 3460', 4460) configuré pour modifier les dimensions d'au moins un condensateur (3480, 3480', 4480).

6.  Système de transfert de puissance inductive selon la revendication 5, le modificateur de dimensions (3460) comprenant au moins un cristal piézoélectrique (460) câblé à une alimentation en courant continu variable (440) et couplé à au moins une plaque capacitive (3482A, 3482B, 4482A, 4482B) du condensateur (3480, 4480) de telle manière que la distance entre les plaques capacitives est ajustée lorsque l'alimentation en courant continu varie.

7.  Système de transfert de puissance inductive selon la revendication 2, ledit au moins un guide de flux magnétique (1620A, 1630A, 1620B, 1630B) étant configuré pour diriger un flux magnétique de l'inducteur primaire (1220A, 1220B) à l'inducteur secondaire (1320A, 1320B), le modulateur de fréquence (1400A, 1400B) comprenant au moins une bobine de modulation (1420A, 1420B) câblée à une alimentation en courant continu variable (1440A, 1440B) et exploitable pour modifier la perméabilité magnétique du au moins un guide de fluide magnétique (1620A, 1620B, 1630A, 1630B).

8.  Système de transfert de puissance inductive selon la revendication 1 comprenant de plus un guide de flux magnétique (2620) pour diriger un flux magnétique de l'inducteur primaire (223) à l'inducteur secondaire (323), le modulateur de fréquence (403A, 403B) comprenant au moins un modificateur de dimensions (460, 2460A-C) configuré pour ajuster les dimensions entre le guide de flux (2620) et au moins l'un des inducteurs, l'inducteur primaire (223) et l'inducteur secondaire (323).

9.  Système de transfert de puissance inductive selon la revendication 8, le modificateur de dimensions (460, 2460A-C) comprenant au moins un cristal piézoélectrique (440) couplé au guide de flux (2620) et à l'inducteur secondaire (323) et câblé à une alimentation en courant continu variable (440) de telle manière que la distance entre le guide de flux (2620) et l'inducteur est ajustée lorsque l'alimentation en courant continu varie.

10. Sortie de système de transfert de puissance inductive selon les revendications 1 et 2, le détecteur de signal (623) comprenant l'inducteur primaire (223) exploitable pour détecter des signaux émis par l'inducteur secondaire (323) comme un système de transmission bobine à bobine.

**Fig. 1B**

TO
POWER
SUPPLY

**Fig. 1A**

**Fig. 1C**

**Fig. 1D**

**Fig. 1E**

240

POWER
SUPPLY

101

231

201

DRIVER

221

PRIMARY
INDUCTOR

MAGNETIC FLUX GUIDE

601

321

SECONDARY
INDUCTOR

401

RECEIVER SIDE
FREQUENCY
MODULATOR

331

RECTIFIER

POWER
MONITOR

351

341

ELECTRICAL
LOAD

301

# Fig. 2A

**Fig. 2B**

**Fig. 2**

Diagram labels: 240 POWER SUPPLY; 103; 233 DRIVER; 203; 223 PRIMARY INDUCTOR; 403A OUTLET SIDE FREQUENCY MODULATOR; 613 DETECTOR; 623; MAGNETIC FLUX GUIDE; 603; SIGNAL TRANSFER; 323 SECONDARY INDUCTOR; 403B RECEIVER SIDE FREQUENCY MODULATOR; EMITTER 633; 333 RECTIFIER; POWER MONITOR 353; 343 ELECTRICAL LOAD; 303

**Fig. 3A**

Fig. 3B

START

Step (a) DRIVER PROVIDES OSCILLATING
VOLTAGE TO PRIMARY COIL
WITH A FREQUENCY $F_T$

Step (b) SECONDARY VOLTAGE IS
INDUCED IN SECONDARY
COIL

Step (c) POWER MONITOR MONITORS
THE POWER RECEIVED BY
THE ELECTRICAL LOAD

Step (d)

YES   IS THE POWER
WITHIN REQUIRED
RANGE?

NO

YES   IS THE
POWER ABOVE
REQUIRED RANGE?

NO

NATURAL
FREQUENCY
DECREASED

NATURAL
FREQUENCY
INCREASED

**Fig. 4**

20

**Fig. 5A**

**Fig. 5B**

**Fig. 6A**

**Fig. 6B**

**Fig. 6C**

**Fig. 7A**

**Fig. 7B**

**Fig. 7C**

**Fig. 8A**

3482A
3484
3480
3482B
d
3460

**Fig. 8B**

3460'
3480'
d

**Fig. 9**

A
4482A
4484
4480
4482B
4460

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011036659 A2
- US 20100066176 A1
- US 8981598 B2
- US 20100072825 A1